(19) Europäisches Patentamt
European Patent Office
Office européen des brevets

(11) **EP 4 418 352 A1**

(12) **EUROPEAN PATENT APPLICATION**
published in accordance with Art. 153(4) EPC

(43) Date of publication:
**21.08.2024 Bulletin 2024/34**

(21) Application number: **23799741.6**

(22) Date of filing: **08.05.2023**

(51) International Patent Classification (IPC):
*H01M 4/1391* (2010.01)     *H01M 4/1395* (2010.01)
*H01M 4/131* (2010.01)     *H01M 4/134* (2010.01)
*H01M 4/04* (2006.01)     *H01M 4/48* (2010.01)
*H01M 4/38* (2006.01)     *H01M 10/052* (2010.01)
*H01M 4/02* (2006.01)

(52) Cooperative Patent Classification (CPC):
**H01M 4/02; H01M 4/04; H01M 4/131; H01M 4/134;
H01M 4/1391; H01M 4/1395; H01M 4/38;
H01M 4/48; H01M 10/052**

(86) International application number:
**PCT/KR2023/006207**

(87) International publication number:
**WO 2023/214860 (09.11.2023 Gazette 2023/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.05.2022 KR 20220055970**

(71) Applicant: **LG Energy Solution, Ltd.
Seoul 07335 (KR)**

(72) Inventors:
• **CHAE, Jonghyun
Daejeon 34122 (KR)**
• **LEE, Ilha
Daejeon 34122 (KR)**
• **JEON, Seoyoung
Daejeon 34122 (KR)**
• **KOO, Daeryung
Daejeon 34122 (KR)**
• **KWON, Yohan
Daejeon 34122 (KR)**
• **KIM, Sarah
Daejeon 34122 (KR)**
• **JOO, Mun Kyu
Daejeon 34122 (KR)**

(74) Representative: **Hoffmann Eitle
Patent- und Rechtsanwälte PartmbB
Arabellastraße 30
81925 München (DE)**

(54) **ELECTRODE PRE-LITHIATION METHOD, PRE-LITHIATED ELECTRODE FOR LITHIUM SECONDARY BATTERY, AND ELECTRODE PRE-LITHIATION DEVICE**

(57)     Disclosed is an electrode pre-lithiation method, a pre-lithiated electrode for a lithium secondary battery, and an electrode pre-lithiation apparatus.

[Figure 1]

EP 4 418 352 A1

Processed by Luminess, 75001 PARIS (FR)

**Description**

[Technical Field]

The present application relates to an electrode pre-lithiation method, a pre-lithiated electrode for a lithium secondary battery, and an electrode pre-lithiation apparatus.

The present application claims priority to and the benefit of Korean Patent Application No. 10-2022-0055970 filed in the Korean Intellectual Property Office on May 6, 2022, the entire contents of which are incorporated herein by reference.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, an electrode, an electrolyte solution, and a separator. The electrode includes an electrode active material for intercalating and deintercalating lithium ions to and from the positive electrode, and a silicon-based particle having a high discharge capacity may be used as the electrode active material.

In general, a carbon material such as graphite is used for an electrode of a lithium secondary battery, but the theoretical capacity density of carbon is 372 mAh/g (833 mAh/cm$^3$). Therefore, in order to improve the energy density of the electrode, silicon (Si), tin (Sn), and oxides and alloys thereof, which are alloyed with lithium, are considered as electrode materials. Among them, silicon-based materials have attracted attention due to their low cost and high capacity (4200 mAh/g).

However, the silicon has a problem in that volume change (shrinkage or expansion) occurs during the intercalation/deintercalation of lithium ions, resulting in deterioration of mechanical stability, and as a result, cycle characteristics are impaired. Therefore, it is necessary to develop a material having structural stability, which is excellent in stability when used as an active material of an electrochemical device, and capable of ensuring cycle characteristics.

In addition, in the case of using a silicon-based electrode active material, a problem arises in that the initial irreversible capacity is large. In the charging and discharging reactions of the lithium secondary battery, lithium discharged from the positive electrode is intercalated into the electrode during charging, and is deintercalated from the electrode to return to the positive electrode again during discharging. In the case of the silicon-based electrode active material, the volume change and the surface side reaction are severe, so that a large amount of lithium intercalated in the electrode during initial charging does not return to the positive electrode again, and thus an initial irreversible capacity increases. When the initial irreversible capacity increases, there occurs a problem that the battery capacity and the cycle are rapidly reduced.

In order to solve the above problem, known is a pre-lithiation method of a silicon electrode including a silicon-based electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating an electrode, and the like.

However, the physicochemical method of the related art involves a possibility of danger, such as fire and explosion, due to environmental factors that the method should be performed at high temperatures. In addition, the electrochemical method of the related art cannot uniformly control the initial irreversible capacity and increases production cost.

In particular, in the lithium metal transfer process, it is difficult to transfer lithium metal safely and easily, and even if lithium metal is transferred, the highly reactive lithium metal immediately starts reacting with the electrode active material through direct contact, thereby causing problems such as particle breakage on the surface of the electrode active material layer.

Therefore, in pre-lithiating the electrode, it is necessary to research a process and an apparatus that can uniformly pre-lithiate lithium in an electrode active material layer in a more safe and efficient manner.

[Related Art Document]

[Patent Document]

Japanese Patent Application Publication No. 2009-080971

[Detailed Description of the Invention]

[Technical Problem]

The present application relates to an electrode pre-lithiation method, a pre-lithiated electrode for a lithium secondary battery, and an electrode pre-lithiation apparatus.

[Technical Solution]

An exemplary embodiment of the present specification provides an electrode pre-lithiation method including: preparing an electrode having an electrode active material layer coated on at least one surface of an electrode current collector layer; transferring an intermediate layer of an intermediate layer laminate onto the electrode active material layer by performing lamination such that the intermediate layer comes into contact with the electrode active material layer, wherein the intermediate layer laminate comprises a first base layer, a first release layer, and the intermediate layer, which are sequentially stacked; removing the first base layer and the first release layer after transferring the intermediate layer; transferring a lithium metal layer of a lithium metal layer laminate onto the intermediate layer of the electrode active material layer to which the intermediate layer has been transferred by performing lamination such that the lithium metal layer comes into contact with the intermediate layer, wherein the lithium metal layer laminate comprises a second base layer, a second release layer, and the lithium metal layer, which are sequentially stacked; and removing the second base layer after transferring the lithium metal layer laminate.

Another exemplary embodiment provides an electrode for a lithium secondary battery pre-lithiated according to the electrode pre-lithiation method of the present application.

Still another exemplary embodiment of the present application provides an electrode pre-lithiation apparatus including: an electrode extraction unit configured to extract an electrode having electrode active material layers coated on both surfaces of an electrode current collector layer; an intermediate layer transfer unit configured to laminate an intermediate layer laminate on each of the electrode active material layers provided on both surfaces of the electrode, wherein the intermediate layer laminate comprises a first base layer, a first release layer, and the intermediate layer, which are sequentially stacked; a lithium metal layer transfer unit configured to laminate a lithium metal layer laminate on each of the intermediate layers of the electrode active material layers to which the intermediate layers have been transferred, wherein the lithium metal layer laminate comprises a second base layer, a second release layer, and the lithium metal layer, which are sequentially stacked; and an electrode collection unit.

[Advantageous Effects]

The electrode pre-lithiation method according to an exemplary embodiment of the present invention is to manufacture a pre-lithiated electrode according to the two transfer processes. Specifically, in order to minimize a non-uniform pre-lithiation aspect during the manufacture of a pre-lithiated electrode and to suppress lithium loss due to a side reaction during an electrode pre-lithiation process, the method includes transferring the intermediate layer to the top of the electrode active material layer, so that the lithium metal does not come into direct contact with the electrode active material layer and the pre-lithiation rate can be controlled.

In addition, in the present application, the intermediate layer is formed not by a wet on dry process of coating an intermediate layer composition on top of the electrode active material layer but by a dry on dry process of transferring the intermediate layer laminate having the intermediate layer to the top of the electrode active material layer. Accordingly, the problem of increasing the electrode resistance due to filling or blocking of electrode pores by infiltration of the intermediate layer composition into pores of the electrode active material layer, which is a problem that may occur when the wet on dry process is used, is solved. This constitutes the main feature of the present invention.

In addition, as the intermediate layer is formed through the dry on dry process as described above, it can be simultaneously transferred to the top of the electrode active material layers provided on both surfaces of the electrode current collector layer. In the case of forming an intermediate layer by a wet on dry process, it is difficult to simultaneously coat the intermediate layer on both surfaces, thereby causing bending or distortion of the electrode. However, when forming the intermediate layer according to the present application, the intermediate layers are formed on both surfaces at the same time by the dry on dry process, so it is possible to solve the problems described above and to improve the economics of the process itself.

That is, according to the electrode pre-lithiation method of the present invention, the intermediate layers for controlling the pre-lithiation rate are formed on both surfaces of the electrode active material layer at the same time through the dry on dry process, so that distortion or bending of the electrode can be prevented. In addition, the infiltration of the intermediate layer composition into the pores of the electrode active material layer is prevented, so that a more excellent pre-lithiated electrode is manufactured.

The electrode pre-lithiation apparatus according to the present application includes two R2R processes in order to apply the two transfer processes as described above. Specifically, the electrode pre-lithiation apparatus includes the electrode extraction unit, the intermediate layer transfer unit, the lithium metal layer transfer unit, and the electrode collection unit, and the two R2R processes are performed twice in the intermediate layer transfer unit and the lithium metal layer transfer unit, respectively.

[Brief Description of Drawings]

FIG. 1 shows an electrode pre-lithiation method according to an exemplary embodiment of the present application.
FIG. 2 shows an electrode pre-lithiation apparatus according to an exemplary embodiment of the present application.
FIG. 3 shows an electrode shape according to Example 1. In particular, FIG. 3(a) shows an electrode on which an intermediate layer A according to Example 1 has been transferred, and FIG. 3(b) shows the electrode of FIG. 3(a) on which a lithium layer has been transferred.
FIG. 4 shows an electrode shape according to Example 2. In particular, FIG. 4(a) shows an electrode on which an intermediate layer B according to Example 2 has been transferred, and FIG. 4(b) shows the electrode of FIG. 4(a) on which a lithium layer has been transferred.
FIG. 5 is a diagram showing a cycle capacity of a half cell manufactured according to the pre-lithiation method according to an exemplary embodiment of the present invention.
FIG. 6 is a diagram showing a cycle capacity retention rate of the half cell manufactured by the pre-lithiation method according to an exemplary embodiment of the present invention.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means an average particle diameter, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides an electrode pre-lithiation method including: preparing an electrode having an electrode active material layer coated on at least one surface of an electrode current collector layer; transferring an intermediate layer of an intermediate layer laminate onto the electrode active material layer by performing lamination such that the intermediate layer comes into contact with the electrode active material layer, wherein the intermediate layer laminate comprises a first base layer, a first release layer, and the intermediate layer, which are sequentially stacked; removing the first base layer and the first release layer after transferring the intermediate layer; transferring a lithium metal layer of a lithium metal layer laminate onto the intermediate layer of the electrode active material layer to which the intermediate layer has been transferred by performing lamination such that the lithium metal layer comes into contact with the intermediate layer, wherein the lithium metal layer laminate comprises a second base layer, a second release layer, and the lithium metal layer, which are sequentially stacked; and removing the second base layer after transferring the lithium metal layer laminate; and pre-lithiating the electrode active material layers.

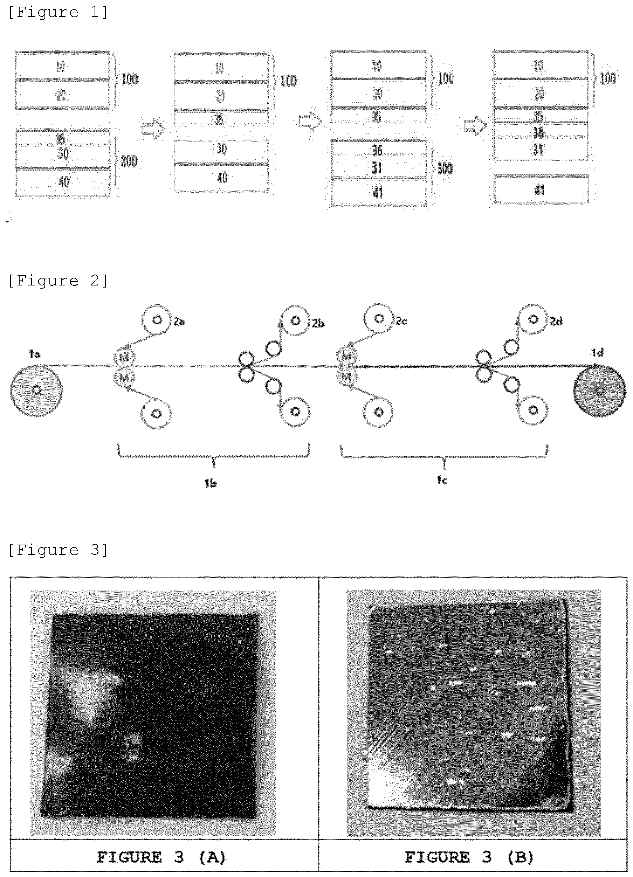

FIG. 1 shows an electrode pre-lithiation method according to an exemplary embodiment of the present application. FIG. 1 shows that an electrode active material layer 20 is formed on one surface of an electrode current collector layer 10. However, FIG. 1 briefly shows the electrode active material layer 20 formed on one surface of the electrode active material layers 20 formed on both surfaces of the electrode current collector layer 10. That is, the electrode active material layer 20 is applied to each of both surfaces of the electrode current collector layer 10, and other pre-lithiation methods may be the same.

The electrode pre-lithiation method according to an exemplary embodiment of the present invention is to manufacture a pre-lithiated electrode according to the two transfer processes. Specifically, in order to minimize a non-uniform pre-lithiation aspect during the manufacture of a pre-lithiated electrode and to suppress lithium loss due to a side reaction during an electrode pre-lithiation process, the method includes transferring the intermediate layer to the top of the electrode active material layer, so that the lithium metal does not come into direct contact with the electrode active material layer and the pre-lithiation rate can be controlled.

Therefore, according to the present invention, when applying electrode pre-lithiation to maximize battery performance improvement, in order to minimize the problems occurring during pre-lithiation as described above, i.e., the non-uniform pre-lithiation and the lithium loss during the pre-lithiation process, the intermediate layer is formed by a dry on dry process, which is a main feature of the present invention.

Hereinafter, specific details of the electrode pre-lithiation method according to an exemplary embodiment of the present invention will be described.

In an exemplary embodiment of the present application, the electrode pre-lithiation method includes preparing an electrode having an electrode active material layer coated on at least one surface of an electrode current collector layer.

Although not specifically shown in FIG. 1, an electrode may be prepared by coating an electrode slurry containing an electrode composition described later on at least one surface of an electrode current collector layer.

In an exemplary embodiment of the present application, the electrode slurry may include an electrode active material layer composition, and a slurry solvent.

In an exemplary embodiment of the present application, a solid content of the electrode slurry may satisfy a range of 5% or more and 80% or less.

In another exemplary embodiment, the solid content of the electrode slurry may satisfy a range of 5% or more and 80% or less, preferably 10% or more and 75% or less, and more preferably 20% or more and 70% or less.

The solid content of the electrode slurry may refer to a content of an electrode active material layer composition included in the electrode slurry, and may refer to a content of the electrode active material composition on the basis of 100 parts by weight of the electrode slurry.

When the solid content of the electrode slurry satisfies the range described above, the viscosity is appropriate during formation of the electrode active material layer, so that particle aggregation of the electrode active material layer composition is minimized to efficiently form the electrode active material layer.

In an exemplary embodiment of the present application, the slurry solvent is not limited thereto as long as it can dissolve the electrode active material layer composition, and specifically, NMP or distilled water may be used.

An electrode according to an exemplary embodiment of the present application may be formed by coating and drying the electrode slurry on the electrode current collector layer.

Through the drying step, the slurry solvent in the electrode slurry may be dried.

In an exemplary embodiment of the present application, an electrode active material layer may be coated on at least one surface of the electrode current collector layer by drying the slurry solvent through the drying step.

In an exemplary embodiment of the present application, the electrode current collector layer generally has a thickness of 1 um to 100 um. Such an electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the electrode current collector layer may have microscopic irregularities formed on a surface to enhance a coupling force of the electrode active material, and may be used in various forms such as a film, a sheet, a foil, a net, a porous body, a foamed body, or a non-woven fabric body.

In an exemplary embodiment of the present application, the electrode current collector layer may have a thickness of 1 um or greater and 100 um or less, and the electrode active material layer may have a thickness of 20 um or greater and 500 um or less.

However, the thicknesses may be various modified depending on a type and use of the electrode used, and is not limited thereto.

In an exemplary embodiment of the present application, the electrode active material layer may include a negative electrode active material; an electrode conductive material; and an electrode binder.

The configuration in which the electrode active material layer includes a negative electrode active material; an electrode conductive material; and an electrode binder may mean including an electrode active material layer composition including a silicon-based active material, an electrode conductive material, and an electrode binder.

In an exemplary embodiment of the present application, there is provided the electrode pre-lithiation method in which the electrode active material layer includes a silicon-based active material, an electrode conductive material, and an electrode binder, and the silicon-based active material includes one or more selected from the group consisting of SiOx (x=0), SiOx (0<x<2), Si/C, a metal impurity, and a Si alloys.

In an exemplary embodiment of the present application, the silicon-based active material may include one or more selected from the group consisting of a Si particle (SiOx (x=0)), SiOx (0<x<2), SiC, a metal impurity, and a Si alloy.

In an exemplary embodiment of the present application, the silicon-based active material may include one or more selected from the group consisting of SiOx (x=0) and SiOx (0<x< 2), and may include the SiOx (x=0) in an amount of 20 parts by weight or more on the basis of 100 parts by weight of the silicon-based active material.

In an exemplary embodiment of the present application, the silicon-based active material may include a metal impurity, and in this case, the metal impurity is an impurity that may be generated during purification of the silicon-based active material, and a content thereof may be 1 part by weight or less on the basis of 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

An average particle diameter (D50) of the active material of the present invention may be 100 nm to 20 $\mu$m, specifically 500 nm to 15 $\mu$m, and more specifically 1 um to 10 um. When the average particle diameter is within the above range, a specific surface area of the particles is within a suitable range, so that a viscosity of the electrode slurry is formed within an appropriate range. Accordingly, the particles constituting the electrode slurry are smoothly dispersed. In addition, when the size of the active material has a value equal to or greater than the lower limit value of the range, a contact area between the active material particles and the conductive material is excellent due to the composite made of the conductive material and the binder in the electrode slurry, so that a sustaining possibility of the conductive network increases, thereby increasing the capacity retention rate. In the meantime, when the average particle diameter satisfies the above range, excessively large active material particles are excluded, so that a surface of the electrode is formed smooth. Accordingly, a current density non-uniformity phenomenon during charging and discharging can be prevented.

In an exemplary embodiment of the present application, the active material generally has a characteristic BET surface area. The BET surface area of the active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured in accordance with DIN 66131 (using nitrogen).

In an exemplary embodiment of the present application, the active material may be included in an amount of 60 parts by weight or more on the basis of 100 parts by weight of the electrode active material layer composition.

In another exemplary embodiment, the active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the electrode active material layer composition.

The electrode active material layer composition according to the present application uses a conductive material and a binder that can control the volume expansion rate during charging and discharging even when the silicon-based active material having a significantly high capacity is used in the above range. Accordingly, even when the silicon-based active material is included within the above range, the electrode active material layer composition does not degrade performance of the electrode and has excellent output characteristics in charging and discharging.

In an exemplary embodiment of the present application, the active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1 below, in which A is an area and P is a boundary line.

$$[\text{Equation 1}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the electrode active material layer to degrade the performance of the battery.

Accordingly, in an exemplary embodiment of the present application, the electrode conductive material may include one or more selected from the group consisting of a particulate conductive material, a linear conductive material, and a planar conductive material.

In an exemplary embodiment of the present application, the particulate conductive material may be used so as to improve conductivity of the electrode, and preferably has conductivity without inducing chemical change. Specifically, the conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a particle diameter of the particulate conductive material may be 10 nm to 100 nm, preferably 20 nm to 90 nm, and more preferably 20 nm to 60 nm.

In an exemplary embodiment of the present application, the conductive material may include a planar conductive material.

The planar conductive material can improve conductivity by increasing surface contact between silicon particles in the electrode and at the same time suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the electrode slurry. Therefore, the dispersion effect is excellent when dispersing using the same equipment and time.

In an exemplary embodiment of the present application, there is provided an electrode composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 $m^2/g$ or greater.

In another exemplary embodiment, the planar conductive material may have a BET specific surface area of 1 $m^2/g$ or greater and 500 $m^2/g$ or less, preferably 5 $m^2/g$ or greater and 300 $m^2/g$ or less, and more preferably 5 $m^2/g$ or greater and 250 $m^2/g$ or less.

In another exemplary embodiment, the planar conductive material is a planar conductive material with a high specific surface area, and the BET specific surface area may satisfy a range of 50 $m^2/g$ or greater and 500 $m^2/g$ or less, preferably 80 $m^2/g$ or greater and 300 $m^2/g$ or less, and more preferably 100 $m^2/g$ or greater and 300 $m^2/g$ or less.

In another exemplary embodiment, the planar conductive material is a planar conductive material with a low specific surface area, and the BET specific surface area may satisfy a range of 1 $m^2/g$ or greater and 40 $m^2/g$ or less, preferably 5 $m^2/g$ or greater and 30 $m^2/g$ or less, and more preferably 5 $m^2/g$ or greater and 25 $m^2/g$ or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the electrode, and can form more smoothly a conductive network in the electrode to improve the conductivity of the electrode.

In an exemplary embodiment of the present application, the electrode conductive material may be included in an amount of 10 parts by weight or more and 40 parts by weight or less on the basis of 100 parts by weight of the electrode active material layer composition.

In another exemplary embodiment, the electrode conductive material may be included in an amount of 10 parts by weight or more and 40 parts by weight or less, preferably 10 parts by weight or more and 30 parts by weight or less, and more preferably 10 parts by weight or more and 20 parts by weight or less on the basis of 100 parts by weight of the electrode active material layer composition.

In an exemplary embodiment of the present application, the electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The electrode binder according to an exemplary embodiment of the present application serves to hold the active material and the conductive material in order to prevent distortion and structural deformation of the electrode structure in volume expansion and relaxation of the silicon-based active material. All of the general binders that satisfy such roles can be applied. Specifically, an aqueous binder may be used, and more specifically, a PAM-based binder may be used. A thickener may be included along with the binder, and CMC may be specifically used as the thickener.

In an exemplary embodiment of the present application, the electrode pre-lithiation method includes transferring, onto the electrode active material layer provided on at least one surface of the electrode, an intermediate layer of an intermediate layer laminate, in which a first base layer, a first release layer, and the intermediate layer are sequentially stacked, by performing lamination such that the intermediate layer comes into contact with the electrode active material layer, and removing the first base layer and the first release layer after transferring the intermediate layer.

Specifically, as shown in FIG. 1, it can be seen that an intermediate layer laminate 200, in which a first base layer 40, a first release layer 30 and an intermediate layer 35 are sequentially stacked, is on top of the electrode active material layer 20. In this case, it can be seen that a lamination process is performed such that the intermediate layer 35 and the electrode active material layer 20 come into contact with each other. After the lamination of the intermediate layer, the first base layer 40 and the first release layer 30 are removed, and thus, it can be seen that the intermediate layer 35 is formed on top of the electrode active material layer 20.

In an exemplary embodiment of the present application, the intermediate layer laminate may include a structure in which a first base layer, a first release layer, and an intermediate layer are sequentially stacked.

Specifically, in an exemplary embodiment of the present application, the first base layer may be one or more selected from the group consisting of polyethylene terephthalate (PET), polyimide (PI), poly(methylmethacrylate)(PMMA), polypropylene, polyethylene and polycarbonate.

In an exemplary embodiment of the present application, a thickness of the first base layer may be 1 um or greater and 300 um or less, and may satisfy a range of 5 um or greater and 200 $\mu$m or less, or 10 $\mu$m or greater and 100 $\mu$m or less.

In an exemplary embodiment of the present application, a first release layer is further included on a surface in contact with the first base layer and the intermediate layer of the intermediate layer laminate in order to improve the peelability of the intermediate layer and to secure the transferability to the top of the electrode active material layer.

That is, the first base layer may have a first release layer formed on at least one surface, or may have first release layers formed on both surfaces. The first release layer makes it possible to prevent a reverse peeling problem that the intermediate layer is transferred onto the first base layer during a winding process for transferring the deposited intermediate layer onto the electrode active material layer, and also makes it possible to easily separate the first base layer after transferring the intermediate layer onto the electrode active material layer.

The first release layer may include one or more selected from the group consisting of silicon-modified polyester in which a silicon chain is graft-linked to a polyester main chain, Si, melamine, and fluorine.

In an exemplary embodiment of the present application, the first release layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present application, there is provided the electrode pre-lithiation method in which the intermediate layer includes an intermediate layer composition and the intermediate layer composition includes one or more selected from the group consisting of a polymer, an inorganic material, an active material, and a conductive material.

In an exemplary embodiment of the present application, the polymer may be an amorphous thermoplastic polymer, for example, poly(methyl methacrylate) (PMMA), polystyrene (PS), polyvinyl chloride (PVC), polycarbonate (PC), or ABS (Acrylonitrile Butadiene Styrene) resin may be used, and preferably, poly(methyl methacrylate) (PMMA), which is an acrylic polymer, may be used.

The use of the polymer according to an exemplary embodiment of the present application as the intermediate layer composition can improve lithium transfer performance by imparting adhesiveness. In addition, when the intermediate layer is made of only polymer without a conductive material or the like, the intermediate layer acts as a barrier layer between lithium and an electrode, thereby suppressing pre-lithiation of an electrode. Further, during the manufacture of a battery, pre-lithiation occurs as the intermediate layer is dissolved in an electrolyte after injection of the electrolyte and thus the electrode and lithium come into contact with each other. Therefore, when the intermediate layer is made of only polymer, the polymer has characteristics of dissolving in the electrolyte and minimizing induction of a side reaction during a battery operation.

In an exemplary embodiment of the present application, the polymer may be included in an amount of 80 parts by weight or more and 100 parts by weight or less on the basis of 100 parts by weight of a total of the intermediate layer composition.

When the polymer is included in an amount of 100 parts by weight on the basis of 100 parts by weight of the total intermediate layer composition, it has a characteristic of a barrier layer against a pre-lithiation reaction in a dry state. When a conductive material or the like is also included, the electrode pre-lithiation is possible through the intermediate layer in a dry state, and a pre-lithiation rate increases as a content of the conductive material or the like increases.

When using an inorganic material in the intermediate layer composition according to an exemplary embodiment of the present application, the inorganic material may be silica ($SiO_2$), alumina ($Al_2O_3$), tungsten oxide ($WO_3$), vanadium oxide ($V_2O_5$) or the like.

When using an active material in the intermediate layer composition according to an exemplary embodiment of the present application, the active material may be $LiMO_2$ (M: including at least one of Ni, Mn, and Co), which is a lithium metal oxide, or the like. In addition, examples of the active material may include graphite, soft carbon, hard carbon, and the like.

In an exemplary embodiment of the present application, the description of the active material and the conductive material may be applied to the description of the electrode active material and the electrode conductive material described above.

When using a conductive material in the intermediate layer composition according to an exemplary embodiment of the present application, the conductive material may be a particulate conductive material or a linear conductive material, and both the particulate conductive material and the linear conductive material may be used together.

In an exemplary embodiment of the present application, the conductive material may preferably include one or more selected from the group consisting of carbon black, a single-walled carbon nanotube (SWCNT) and a multi-walled carbon nanotube (MWCNT), but is not limited thereto.

In an exemplary embodiment of the present application, preferably, the conductive material may include, as a first conductive material, any one selected from the group consisting of carbon black, a single-walled carbon nanotube (SWCNT) and a multi-walled carbon nanotube (MWCNT), and may include another one as a second conductive material, but is not limited thereto.

In an exemplary embodiment of the present application, the intermediate layer composition may include a polymer or a first conductive material: a second conductive material in a weight ratio of 100: 0 to 60: 40, and preferably 100: 0 to 80: 20.

In an exemplary embodiment of the present application, if the conductive material exceeds 40 parts by weight on the basis of 100 parts by weight of the total intermediate layer composition, there is a disadvantage in that the manufacturing difficulty and manufacturing cost of the intermediate layer laminate increase.

An intermediate layer having the composition described above is formed on top of the electrode active material layer, so that the intermediate layer can serve as a buffer layer capable of preventing rapid pre-lithiation by preventing direct contact of lithium metal with the top of the electrode active material layer. That is, the intermediate layer according to the present application can play roles in preventing direct contact between lithium metal and the electrode active material layer, controlling a rate of pre-lithiation to enable pre-lithiation to proceed uniformly in the electrode active material layer, and suppressing a side reaction associated with rapid pre-lithiation to reduce lithium loss.

In an exemplary embodiment of the present application, there is provided the electrode pre-lithiation method in which a thickness of the intermediate layer is 200 um or less.

In an exemplary embodiment of the present application, the thickness of the intermediate layer may satisfy a range of 100 um or less, 75 um or less, and preferably 50 um or less, and 100 nm or greater, and preferably 300 nm or greater.

In another exemplary embodiment, the thickness of the intermediate layer may satisfy a range of 10 um or less, 5 um or less, and preferably 1 um or less, and 100 nm or greater, and preferably 300 nm or greater.

When the thickness of the intermediate layer is satisfied as described above, the intermediate layer can be easily formed on top of the first base layer and the first release layer, and the transfer can be easily performed from the intermediate layer to the electrode. In addition, when the intermediate layer satisfies the above thickness, the intermediate layer can appropriately control the pre-lithiation rate by serving as an appropriate resistor for lithium ions during pre-lithiation, and can minimize its role as an electrode resistor even if it remains on top of the electrode active material layer after cell assembly.

In the case of the intermediate layer according to the present application, the intermediate layer composition is coated on top of the first release layer, dried, and then transferred to the top of the electrode active material layer again.

In an exemplary embodiment of the present application, there is provided the electrode pre-lithiation method in which the transferring of the intermediate layer includes a dry on dry process.

That is, the intermediate layer is formed not by a wet on dry process of coating the intermediate layer composition on top of the electrode active material layer but by a dry on dry process of transferring the intermediate layer laminate having the intermediate layer to the top of the electrode active material layer.

The wet on dry process may refer to a process of applying and coating a coating layer composition on top of a dried layer, and the dry on dry process may refer to a process of transferring a dried layer itself to the top of a dried layer.

The intermediate layer according to an exemplary embodiment of the present application solves the problem of increasing electrode resistance due to filling or blocking of electrode pores by infiltration of the intermediate layer composition into pores of the electrode active material layer, which is a problem that may occur when the wet on dry process is used. This constitutes the main feature of the present invention.

That is, when the intermediate layer composition that is a fluid composition is applied and coated on top of the electrode active material layer in which pores are formed, a phenomenon occurs in which the intermediate layer composition infiltrates into the pores of the electrode active material layer due to fluidity and capillarity, resulting in the above problem. However, the intermediate layer according to the present application is formed on top of the electrode active material layer by a transfer method, resulting in solving the above problem.

In addition, as the intermediate layer is formed through the dry on dry process as described above, it can be simultaneously transferred to the top of the electrode active material layers provided on both surfaces of the electrode current collector layer. In the case of forming an intermediate layer by a wet on dry process, it is difficult to simultaneously coat the intermediate layer on both surfaces, thereby causing bending or distortion of the electrode. However, when forming the intermediate layer according to the present application, the intermediate layers are formed on both surfaces at the same time by the dry on dry process, so it is possible to solve the problems described above and to improve the economics of the process itself.

In an exemplary embodiment of the present application, there is provided the electrode pre-lithiation method in which a first adhesive force of a contact surface of the intermediate layer and the first release layer is 10 gf/inch or higher and 150 gf/inch or lower.

In another exemplary embodiment, the first adhesive force may satisfy a range of 10 gf/inch or higher and 150 gf/inch or lower, specifically 15 gf/inch or higher and 100 gf/inch or lower, and more specifically 20 gf/inch or higher and 100 gf/inch or lower.

In an exemplary embodiment of the present application, the first adhesive force may be measured by a peel tester (AR-2000), a first release layer (Nitto31B), and a rubber roller (2kg) equipment. Specifically, the first release layer is attached to one surface of the intermediate layer, and is then attached by reciprocating once a rubber roller to form a structure in which the first release layer and the intermediate layer are stacked, and the structure is stored at room temperature for 24 hours. Thereafter, the force was measured while peeling off the first release layer with a width of 25 mm, and in this case, the peeling speed was 300 mm/min. and the peeling angle was 180°.

When the first adhesive force satisfies the above range as described above, the intermediate layer can be easily transferred to the top of the electrode active material layer, the intermediate layer laminate can be easily manufactured, and reverse transfer to the first base layer can also be prevented.

In an exemplary embodiment of the present application, there is provided the electrode pre-lithiation method in which a surface roughness ($S_a$) of the intermediate layer is as low as 1/5 or lower than a surface roughness ($S_a$) of the electrode active material layer. The surface roughness ($S_a$) of the intermediate layer refers to a surface roughness of a surface in contact with the lithium metal layer, and an average value is taken after 10 measurements per sample by using a CLSM (Confocal Laser Scanning Microscope) instrument, specifically the Olympus OLS 5100 with a magnification of 50 times and a scanning area of 260μm x 260um.

In general, the electrode active material layer including the active material has a surface roughness ($S_a$) within a range of about 0.4 um to 0.7 um, which is very high, as compared with a surface roughness of the lithium metal layer of 0.04 um to 0.06 um.

That is, if lithium metal is directly transferred to the top of the electrode active material layer having a large surface roughness, contact points between the lithium metal and the electrode active material layer are non-uniform, resulting in increased by-product formation during pre-lithiation. In order to solve this problem, the intermediate layer having the surface roughness described above may be included.

Accordingly, the surface roughness of the intermediate layer according to the present application is designed to be 1/5 or lower than the surface roughness ($S_a$) of the electrode active material layer, so lithium metal can be more uniformly transferred to the top of the electrode active material layer.

In an exemplary embodiment of the present application, the electrode pre-lithiation method may include removing the first base layer and the first release layer after transferring the intermediate layer. That is, the first base layer and the first release layer serve as a transfer laminate for facilitating transfer of the intermediate layer onto the electrode active material layer, and also correspond to a laminate for performing a dry on dry process.

In an exemplary embodiment of the present application, the electrode pre-lithiation method includes transferring, onto the intermediate layer of the electrode active material layer to which the intermediate layer has been transferred, a lithium metal layer of a lithium metal layer laminate, in which a second base layer, a second release layer, and the lithium metal layer are sequentially stacked, by performing lamination such that the lithium metal layer comes into contact with the intermediate layer; and removing the second base layer after transferring the lithium metal layer laminate.

In an exemplary embodiment of the present application, the electrode pre-lithiation method may further include pre-lithiating the electrode active material layer in at least one of the transferring a lithium metal layer, the removing the second base layer after transferring the lithium metal layer laminate, or stages between the transferring of the lithium metal layer and the removing of the second base layer. That is, the pre-lithiation of the electrode active material layer may be performed at any stage after transferring the lithium metal layer to the top of the intermediate layer of the electrode active material layer to which the intermediate layer has been transferred.

Specifically, as shown in FIG. 1, it can be seen that a lithium metal layer laminate 300, in which a second base layer 41, a second release layer 31 and a lithium metal layer 36 are sequentially stacked, is laminated on top of the electrode in which the intermediate layer 35 is formed on top of the electrode active material layer 20. Thereafter, it can be seen that the second base layer 41 is removed, and a structure in which the electrode current collector layer 10, the electrode active material layer 20, the intermediate layer 35, the lithium metal layer 36, and the second release layer 31 are sequentially stacked is formed.

In an exemplary embodiment of the present application, the lithium metal layer laminate may include a structure in which a second base layer, a second release layer, and a lithium metal layer are sequentially stacked.

Specifically, in an exemplary embodiment of the present application, the second base layer may be one or more selected from the group consisting of polyethylene terephthalate (PET), polyimide (PI), poly(methylmethacrylate)(PMMA), polypropylene, polyethylene and polycarbonate.

In an exemplary embodiment of the present application, the description of the above-described first base layer may be applied to the second base layer in the same manner.

In an exemplary embodiment of the present application, the description of the above-described first release layer may be applied to the second release layer in the same manner.

In an exemplary embodiment of the present application, the deposition method for depositing the lithium metal layer on the second base layer having the second release layer formed thereon may be selected from evaporation deposition, chemical vapor deposition (CVD) and physical vapor deposition, but is not limited thereto, and various deposition methods that are used in the art may be used.

In an exemplary embodiment of the present application, the transfer process may be performed by roll pressing of applying a load of 10 kgf to 500 kgf to the electrode in which the lithium metal layer laminate is stacked. Thereafter, a process of removing the second base layer is included. Upon removal, as the second release layer according to the present application is included, direct contact between the lithium metal layer and the air can be prevented to protect the lithium metal layer.

In an exemplary embodiment of the present application, a thickness of the lithium metal layer may be 1 um or greater and 10 um or less, and preferably may satisfy a range of 3 um or greater and 10 um or less.

When the thickness of the lithium metal layer satisfies the above range, the transfer of the lithium metal layer to the electrode active material layer can occur efficiently and the reverse transfer can be prevented.

In an exemplary embodiment of the present application, even after the lithium metal layer is stacked and transferred on top of the intermediate layer, the intermediate layer prevents the lithium metal layer from directly contacting the electrode active material layer, thereby delaying the progress of the pre-lithiation process.

On the other hand, if the intermediate layer according to the present application is first transferred to the top of the lithium metal layer, which is then laminated to the electrode active material layer, the intermediate layer and the lithium metal layer are simultaneously laminated to the electrode active material layer, unlike the present application, so that pre-lithiation proceeds at the same time and it may be difficult to derive uniform contact conditions on top of the electrode.

In an exemplary embodiment of the present application, the electrode pre-lithiation method includes pre-lithiating the electrode active material layer.

The pre-lithiating may mean a stage from a time when pre-lithiation occurs (the pre-lithiation may proceed after the lithium metal layer is transferred to the top of the electrode active material layer on which the intermediate layer has been formed) to a time when the lithium metal layer disappears visually and the pre-lithiation is completed.

In an exemplary embodiment of the present application, the pre-lithiating of the electrode may be performed at a temperature condition of 60°C to 80°C under pressurization conditions of 5 kgf/cm$^2$ to 20 kgf/cm$^2$.

When pre-lithiation is performed under the above conditions, a completion time of pre-lithiation may satisfy a range of 1 hour to 24 hours.

That is, the intermediate layer is formed on top of the electrode active material layer according to the present application, so rapid pre-lithiation can be prevented, and pre-lithiation can proceed more uniformly by satisfying the pre-lithiation completion time as described above.

Meanwhile, when the composition of the intermediate layer is made of a polymer, pre-lithiation is suppressed in a dry state, and pre-lithiation may occur after injection of an electrolyte during battery assembly.

Another exemplary embodiment of the present application provides an electrode for a lithium secondary battery pre-lithiated according to the electrode pre-lithiation method of the present application.

An exemplary embodiment of the present application provides a lithium secondary battery including an electrode pre-lithiated according to the present application; a separator located between the electrode and the counter electrode; and an electrolyte.

In another exemplary embodiment of the present application, the electrode active material layer may include a positive electrode active material, an electrode conductive material, and an electrode binder.

The configuration in which the electrode active material layer includes a positive electrode active material, an electrode conductive material, and an electrode binder may mean including a positive electrode active material layer composition including a positive electrode active material, an electrode conductive material, and an electrode binder.

In an exemplary embodiment of the present application, when the electrode is a positive electrode, the positive electrode may be formed on a positive electrode current collector, and may include a positive electrode active material layer including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material layer composition may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as Chemical Formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{2-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$), Chemical Formula $LiM_{2-c4}M'_{c4}PO_4$ (where M is transition metal, and M' is at least one selected from the group consisting of Co, Ni, Fe, Cr, Zn and Ta, and satisfies $0.01 \leq c4 \leq 0.1$) or

$Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

In an exemplary embodiment of the present application, the electrode active material layer may include a positive electrode active material; an electrode conductive material; and an electrode binder. In an exemplary embodiment of the present application, there is provided the electrode pre-lithiation method in which the positive electrode active material includes one or more selected from the group consisting of $LiNi_xCo_yMn_zO_2$ (x+y+z=1); $LiNi_aCo_bMn_cAl_dO_2$ (a+b+c+d=1); $LiMn_2O_4$; $LiNi_{0.5}Mn_{1.5}O_2$; and $LiM_xFe_yPO_4$(M: transition metal, x+y=1).

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In an exemplary embodiment of the present application, the separator serves to separate the electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component, or a polymer material may be used to secure heat resistance or mechanical strength, and the separator having a single layer or multilayer structure may be selectively used.

In an exemplary embodiment of the present application, the electrolyte solution may include an organic liquid electrolyte solution, an inorganic liquid electrolyte, a solid polymer electrolyte, a gel-type polymer electrolyte solution, a solid inorganic electrolyte solution, or a molten-type inorganic electrolyte solution that may be used in the manufacturing of the lithium secondary battery, but is not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving lifetime characteristics of the battery, suppressing a decrease in battery capacity, improving discharge capacity of the battery, and the like, in addition to the above-described electrolyte solution components.

An exemplary embodiment of the present invention provides a battery module including the lithium secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

An exemplary embodiment of the present application provides an electrode pre-lithiation apparatus including: an electrode extraction unit configured to extract an electrode having electrode active material layers coated on both surfaces of an electrode current collector layer; an intermediate layer transfer unit configured to laminate an intermediate layer laminate, in which a first base layer, a first release layer, and an intermediate layer are sequentially stacked, on each of the electrode active material layers provided on both surfaces of the electrode; a lithium metal layer transfer unit configured to laminate a lithium metal layer laminate, in which a second base layer, a second release layer, and a lithium metal layer are sequentially stacked, on each of the intermediate layers of the electrode active material layers to which the intermediate layers have been transferred; and an electrode collection unit.

In an exemplary embodiment of the present application, there is provided the electrode pre-lithiation apparatus in which the intermediate layer transfer unit includes an intermediate layer laminate collection unit configured to collect the first base layer and the first release layer, and the lithium metal layer transfer unit includes a lithium metal layer laminate collection unit configured to collect the second base layer.

The electrode pre-lithiation apparatus according to the present application includes two R2R processes in order to apply the two transfer processes as described above. Specifically, the electrode pre-lithiation apparatus includes the electrode extraction unit, the intermediate layer transfer unit, the lithium metal layer transfer unit, and the electrode collection unit, and the two R2R processes are performed twice in the intermediate layer transfer unit and the lithium metal layer transfer unit, respectively.

FIG. 2 shows an electrode pre-lithiation apparatus according to an exemplary embodiment of the present application. Specifically, the apparatus includes an electrode extraction unit 1a including an electrode roll having electrode active material layers coated on both surfaces of an electrode current collector layer, and an electrode is extracted from the electrode extraction unit. Then, the electrode passes through an intermediate layer transfer unit 1b, in which the intermediate layers can be transferred to both surfaces of the electrode active material layers. Specifically, the intermediate layer transfer unit 1b may include an intermediate layer laminate laminating unit 2a and an intermediate layer laminate removing unit (2b). It can be seen that R2R lamination is performed once in the intermediate layer laminate laminating unit. Then, the electrode passes through the lithium metal layer transfer unit 1c, in which the lithium metal layer is transferred to the top of the intermediate layer. In this case, the lithium metal layer transfer unit 1c includes a lithium metal layer laminate laminating unit 2c and a lithium metal layer laminate removing unit 2d. In this case, it can be seen that R2R lamination proceeds in the lithium metal layer laminate laminating unit. Thereafter, the electrode is collected by an electrode collection unit (1d).

That is, the electrode pre-lithiation apparatus according to the present application corresponds to an apparatus having a feature that two R2R processes are performed in which the intermediate layer is transferred by a dry on dry process and the lithium metal layer is transferred.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Manufacture Example>**

**Manufacture of Electrode**

A positive electrode slurry was manufactured by setting the solid content ratios of positive electrode material (NCMA): conductive material (MWCNT): binder (PVDF-HFP) of a positive electrode to 96 wt%: 2 wt%: 2 wt% and using NMP as a solvent. The electrode slurry was coated on both surfaces of an aluminum current collector (thickness: 15 um) such that the capacity per area based on the coating on the single surface was 4.2 mAh/cm$^2$, dried in a vacuum oven at 130°C for 12 hours, and subjected to roll pressing to manufacture an electrode coated with an electrode active material layer on both surfaces.

**Manufacture of Intermediate Layer Laminate**

Table 1 below shows the composition and thickness of the intermediate layer laminate. The intermediate layer laminate is in the form of a PET film base coated with an adhesive acrylic polymer, and the intermediate layer laminate was prepared by varying the thicknesses of the PET film and the intermediate layer.

[Table 1]

| Intermediate layer laminate | Base film/thickness | Intermediate layer composition/thickness |
|---|---|---|
| A | PET/75 um | Adhesive acrylic polymer/50 um |
| B | PET/35 um | Adhesive acrylic polymer/10 um |

**Manufacture of Lithium Deposited Film**

Table 2 below shows the composition and thickness of the lithium deposited film. The lithium deposited film has a structure in which a release layer made of an acrylic polymer having a thickness of 500 nm is coated on a PET base having a thickness of 25 um and a lithium layer having a thickness of 6.2 um is deposited on the release layer by thermal evaporation.

[Table 2]

| Lithium deposited film | Base film (thickness)/ release layer (thickness) | Lithium Layer/Thickness |
|---|---|---|
| C | PET (25 $\mu$m)/Acrylic polymer (500 nm) | Lithium/6.2 um |

**Example 1**

After subjecting the electrode and the intermediate layer laminate A manufactured above to roll lamination, the base film (PET) and the release layer were removed to manufacture an electrode to which the intermediate layer was transferred. The intermediate layer was peeled off at the interface between the release layer and the intermediate layer and transferred to the electrode. After subjecting the electrode to which the intermediate layer has been transferred and the lithium deposited film (C) to roll lamination, the base layer (PET) of the lithium deposited film was removed to manufacture a multi-layered (release layer/lithium layer/intermediate layer/electrode layer) electrode where the lithium layer/release layer were transferred (dry on dry method) (refer to FIG. 3).

**Example 2**

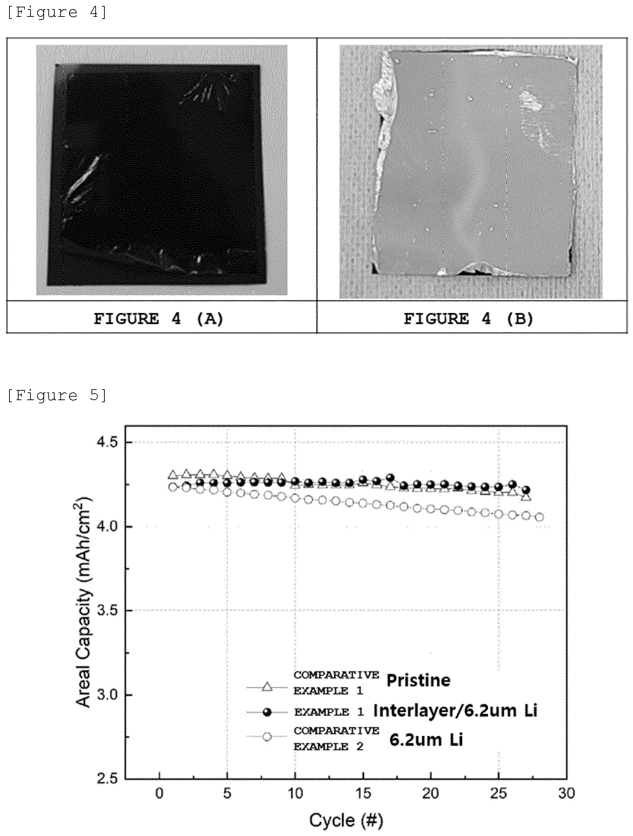

A multi-layered electrode where the intermediate layer and the lithium layer (including the release layer) were sequentially transferred was manufactured in the same manner as in Example 1 except that the intermediate layer B was used instead of the intermediate layer A in Example 1 (refer to FIG. 4).

**Comparative Example 1**

In Example 1, an electrode where the intermediate layer (A or B) and the lithium metal layer were not transferred was named a pristine electrode (Comparative Example 1).

**Comparative Example 2**

An electrode was manufactured in the same manner as in Example 1 except that the intermediate layer (A or B) was not formed on top of the electrode active material layer but the lithium metal layer was directly transferred to the top of the electrode active material layers provided on both surfaces of the electrode current collector layer in Example 1.

Coin half-cells were manufactured with the electrodes manufactured by the methods in Example 1 and Comparative Examples 1 and 2, and initial charge/discharge capacities and cycle performance thereof were evaluated, and the results are shown in Table 3 below and FIG. 5. The electrolyte used to manufacture the coin half-cell was 1M $LiPF_6$ in EC/EMC (30:70 vol %), and a 150 um thick lithium metal foil was used as a counter electrode. When measuring the initial charge/discharge capacities, the C-rate was set to 0.1C, charging was performed under the upper limit voltage of 4.3V, CCCV condition and cut-off current of 0.005C, and discharging was performed under the lower limit voltage of 3.0V and CC condition. The cycle capacity measurement was performed under conditions of upper and lower limit voltages of 4.3V/3.0V, C-rate of 0.33C, charge CCCV, and discharge CC.

[Table 3]

| Electrode type | Initial charge capacity (mAh/cm$^2$) | Initial discharge capacity (mAh/cm$^2$) |
|---|---|---|
| Intermediate layer/lithium layer transfer electrode (Example 1) | 6.52 | 4.23 |
| Pristine electrode (Comparative Example 1) | 4.94 | 4.23 |
| Lithium layer transfer electrode (Comparative Example 2) | 5.36 | 3.55 |

According to Table 3 and FIG. 5, it can be seen that the electrode according to Example 1, in which the electrode including the lithium metal layer was manufactured by a sequential transfer process, has a significantly higher initial charge capacity than those of the electrodes manufactured according to Comparative Examples 1 and 2. Specifically, the method according to Example 1 includes the process of transferring the intermediate layer to the top of the electrode active material layer in order to solve a surface active material cracking problem with respect to the high-capacity positive electrode active material, so that lithium metal does not directly contact the electrode active material layer. Therefore, it could be seen that rapid pre-lithiation of the active material could be prevented.

In the case of Example 1, as the intermediate layer was formed by the dry on dry process as described above, unlike the wet on dry process, the lithium metal layer could be simultaneously transferred to the top of the electrode active material layers provided on both surfaces of the electrode current collector layer.

In the case of Example 2, as the intermediate layer was formed with a thin thickness, the intermediate layer could appropriately control the pre-lithiation rate, and could minimize its role as an electrode resistor even if it remains on top of the electrode active material layer after cell assembly.

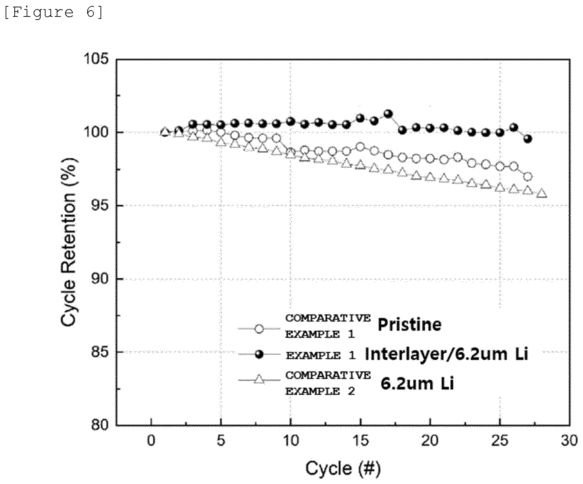

In the case of the pristine electrode not including the lithium metal layer of Comparative Example 1, the cycle performance was found to be inferior to that of Example 1 (refer to FIG. 6).

In the case of Comparative Example 2, the intermediate layer was not formed, and the lithium metal layer was directly transferred to the top of the electrode. In the case where the process proceeds as in Comparative Example 2, it was confirmed that the cracking phenomenon of the active material particle on the electrode surface side due to the rapid electrode pre-lithiation lowered the cycle performance, as compared with Example 1 (refer to FIG. 6).

<Explanation of Reference Numerals and Symbols>

10:　　electrode current collector layer
20:　　electrode active material layer
30:　　first release layer
35:　　intermediate layer
40:　　first base layer
31:　　second release layer
41:　　second base layer
36:　　lithium metal layer
100:　　electrode
200:　　intermediate layer laminate
300:　　lithium metal layer laminate
1a:　　electrode extraction unit
1b:　　intermediate layer transfer unit
1c:　　lithium metal layer transfer unit
1d:　　electrode collection unit
2a:　　intermediate layer laminate laminating unit
2b:　　intermediate layer laminate removing unit
2c:　　lithium metal layer laminate laminating unit
2d:　　lithium metal layer laminate removing unit

Claims

1. An electrode pre-lithiation method comprising:

   preparing an electrode having an electrode active material layer coated on at least one surface of an electrode current collector layer;
   transferring an intermediate layer of an intermediate layer laminate onto the electrode active material layer by performing lamination such that the intermediate layer comes into contact with the electrode active material layer, wherein the intermediate layer laminate comprises a first base layer, a first release layer, and the intermediate layer, which are sequentially stacked;
   removing the first base layer and the first release layer after transferring the intermediate layer;
   transferring a lithium metal layer of a lithium metal layer laminate onto the intermediate layer of the electrode active material layer to which the intermediate layer has been transferred by performing lamination such that the lithium metal layer comes into contact with the intermediate layer, wherein the lithium metal layer laminate comprises a second base layer, a second release layer, and the lithium metal layer, which are sequentially stacked; and
   removing the second base layer after transferring the lithium metal layer laminate.

2. The electrode pre-lithiation method of claim 1, further comprising:
   pre-lithiating the electrode active material layer in at least one of the transferring a lithium metal layer, the removing the second base layer after transferring the lithium metal layer laminate, or stages between the transferring of the lithium metal layer and the removing of the second base layer.

3. The electrode pre-lithiation method of claim 1, wherein the intermediate layer comprises an intermediate layer composition, and
   wherein the intermediate layer composition comprises one or more selected from the group consisting of a polymer, an inorganic material, an active material, and a conductive material.

4. The electrode pre-lithiation method of claim 1, wherein a thickness of the intermediate layer is 50 um or less.

5. The electrode pre-lithiation method of claim 1, wherein the transferring of the intermediate layer comprises a dry on dry process.

6. The electrode pre-lithiation method of claim 1, wherein a first adhesive force of a contact surface of the intermediate layer and the first release layer is 10 gf/inch or higher and 150 gf/inch or lower.

7. The electrode pre-lithiation method of claim 1, wherein the electrode active material layer comprises a negative electrode active material, an electrode conductive material, and an electrode binder, and
   wherein the negative electrode active material comprises one or more selected from the group consisting of graphite, soft carbon, hard carbon, SiOx (x=0), SiOx (0<x<2), Si/C, a metal impurity, and a Si alloy.

8. The electrode pre-lithiation method of claim 1, wherein the electrode active material layer comprises a positive electrode active material, an electrode conductive material, and an electrode binder, and
   wherein the positive electrode active material comprises one or more selected from the group consisting of $LiNi_xCo_yMn_zO_2$ (x+y+z=1), $LiNi_aCo_bMn_cAl_dO_2$ (a+b+c+d=1), $LiMn_2O_4$, $LiNi_{0.5}Mn_{1.5}O_2$, and $LiM_xFe_yPO_4$(M: transition metal, x+y=1).

9. The electrode pre-lithiation method of claim 1, wherein a surface roughness ($S_a$) of the intermediate layer is as low as 1/5 or lower than a surface roughness ($S_a$) of the electrode active material layer.

10. The electrode pre-lithiation method of claim 1, wherein the first base layer and the second base layer are one or more selected from the group consisting of polyethylene terephthalate (PET), polyimide (PI), poly(methylmethacrylate)(PMMA), polypropylene, polyethylene and polycarbonate.

11. The electrode pre-lithiation method of claim 1, wherein a thickness of the lithium metal layer is 1 um or greater and 10 um or less.

12. An electrode for a lithium secondary battery pre-lithiated according to the electrode pre-lithiation method of any one of claims 1 to 11.

13. An electrode pre-lithiation apparatus comprising:

an electrode extraction unit configured to extract an electrode having electrode active material layers coated on both surfaces of an electrode current collector layer;
an intermediate layer transfer unit configured to laminate an intermediate layer laminate on each of the electrode active material layers provided on both surfaces of the electrode, wherein the intermediate layer laminate comprises a first base layer, a first release layer, and the intermediate layer, which are sequentially stacked;
a lithium metal layer transfer unit configured to laminate a lithium metal layer laminate on each of the intermediate layers of the electrode active material layers to which the intermediate layers have been transferred, wherein the lithium metal layer laminate comprises a second base layer, a second release layer, and the lithium metal layer, which are sequentially stacked; and
an electrode collection unit.

14. The electrode pre-lithiation apparatus of claim 13, wherein the intermediate layer transfer unit comprises an intermediate layer laminate collection unit configured to collect the first base layer and the second release layer, and wherein the lithium metal layer transfer unit comprises a lithium metal layer laminate collection unit configured to collect the second base layer.

[Figure 1]

[Figure 2]

[Figure 3]

| FIGURE 3 (A) | FIGURE 3 (B) |

[Figure 4]

| FIGURE 4 (A) | FIGURE 4 (B) |

[Figure 5]

[Figure 6]

## INTERNATIONAL SEARCH REPORT

| International application No. |
| --- |
| **PCT/KR2023/006207** |

**A.  CLASSIFICATION OF SUBJECT MATTER**

**H01M 4/1391**(2010.01)i; **H01M 4/1395**(2010.01)i; **H01M 4/131**(2010.01)i; **H01M 4/134**(2010.01)i; **H01M 4/04**(2006.01)i; **H01M 4/48**(2010.01)i; **H01M 4/38**(2006.01)i; **H01M 10/052**(2010.01)i; **H01M 4/02**(2006.01)i

According to International Patent Classification (IPC) or to both national classification and IPC

**B.  FIELDS SEARCHED**

Minimum documentation searched (classification system followed by classification symbols)

H01M 4/1391(2010.01); H01M 10/052(2010.01); H01M 10/0525(2010.01); H01M 4/13(2010.01); H01M 4/131(2010.01); H01M 4/133(2010.01); H01M 4/139(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전리튬화(pre-lithiation), 기재층(base-layer), 활물질(active material), 리튬금속 (lithium metal), 라미네이션(lamination), 드라이온드라이(dry on dry), 이차전지(secondary battery)

**C.  DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0029459 A (LG CHEM, LTD.) 16 March 2021 (2021-03-16)<br>See claims 1-10, and figure 1. | 1-14 |
| A | KR 10-2019-0017417 A (LG CHEM, LTD.) 20 February 2019 (2019-02-20)<br>See claims 1-11, and figure 1. | 1-14 |
| A | CN 110828778 A (FUYANG SOLID ENERGY STORAGE TECHNOLOGY (LIYANG) CO., LTD.) 21 February 2020 (2020-02-21)<br>See claim 1, and figure 1. | 1-14 |
| A | KR 10-2021-0113264 A (MAXWELL TECHNOLOGIES, INC.) 15 September 2021 (2021-09-15)<br>See claims 1-20. | 1-14 |
| A | KR 10-2022-0028422 A (LG ENERGY SOLUTION, LTD.) 08 March 2022 (2022-03-08)<br>See claims 1-13. | 1-14 |

☐ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **16 August 2023** | **17 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/006207**

| Patent document cited in search report | | | Publication date (day/month/year) | Patent family member(s) | | | Publication date (day/month/year) |
|---|---|---|---|---|---|---|---|
| KR | 10-2021-0029459 | A | 16 March 2021 | CN | 113826237 | A | 21 December 2021 |
| | | | | EP | 3961764 | A1 | 02 March 2022 |
| | | | | US | 2022-0223847 | A1 | 14 July 2022 |
| | | | | WO | 2021-045431 | A1 | 11 March 2021 |
| KR | 10-2019-0017417 | A | 20 February 2019 | CN | 110268557 | A | 20 September 2019 |
| | | | | CN | 110268557 | B | 13 September 2022 |
| | | | | EP | 3570349 | A1 | 20 November 2019 |
| | | | | EP | 3570349 | B1 | 13 January 2021 |
| | | | | JP | 2020-506522 | A | 27 February 2020 |
| | | | | JP | 7038947 | B2 | 22 March 2022 |
| | | | | KR | 10-2264691 | B1 | 15 June 2021 |
| | | | | PL | 3570349 | T3 | 17 May 2021 |
| | | | | US | 11316156 | B2 | 26 April 2022 |
| | | | | US | 2019-0372118 | A1 | 05 December 2019 |
| | | | | WO | 2019-031732 | A1 | 14 February 2019 |
| CN | 110828778 | A | 21 February 2020 | CN | 110828778 | B | 12 April 2022 |
| KR | 10-2021-0113264 | A | 15 September 2021 | CN | 113574697 | A | 29 October 2021 |
| | | | | EP | 3912208 | A1 | 24 November 2021 |
| | | | | JP | 2022-518395 | A | 15 March 2022 |
| | | | | US | 2020-227723 | A1 | 16 July 2020 |
| | | | | WO | 2020-150240 | A1 | 23 July 2020 |
| KR | 10-2022-0028422 | A | 08 March 2022 | None | | | |

Form PCT/ISA/210 (patent family annex) (July 2022)

**REFERENCES CITED IN THE DESCRIPTION**

**Patent documents cited in the description**

- KR 1020220055970
- JP 2009080971 A